# FASCICULE DE BREVET EUROPEEN

(11) **EP 0 394 089 B1**
(45) Date de publication et mention de la délivrance du brevet: **22.01.1997**
(21) Numéro de dépôt: 90400962.8
(22) Date de dépôt: 10.04.1990
(51) Int. Cl.: H05B 3/26, B32B 17/10, C03C 27/12, B60J 1/20

(54) **Vitrage automobile chauffable électriquement**
Elektrisch heizbare Windschutzscheibe
Electrically heated car windshield

(30) Priorité: 17.04.1989 DE 3912512
(43) Date de publication de la demande: 24.10.1990
(73) Titulaire: SAINT-GOBAIN VITRAGE, F-92400 Courbevoie (FR); VEGLA Vereinigte Glaswerke GmbH, D-52066 Aachen (DE)
(72) Inventeur: Goerenz, Walter, D-5110 Alsdorf (DE); Mueller, Achim, D-5120 Herzogenrath (DE); Schaefer, Wolfgang, Dr., D-5100 Aachen (DE)
(74) Mandataire: Luziau, Nelly

(56) Documents cités:
- EP-A- 0 217 703
- WO-A-88/06095
- US-A- 4 725 710
- US-A- 4 820 902

## Description

La présente invention concerne un vitrage automobile chauffable électriquement comportant un revêtement superficiel transparent, conducteur électrique, servant de résistance chauffante, des conducteurs d'alimentation de courant disposés le long de deux bords opposés du vitrage et une couche décorative formant cadre en un émail opaque, en particulier un émail à cuire.

Des vitrages automobiles chauffables dans lesquels la résistance chauffante est une couche superficielle transparente sont connus dans diverses réalisations. Etant donné que la couche chauffante transparente, qui, en règle générale, est un système multicouche comportant une couche conductrice métallique, est avantageusement à protéger contre des influences mécaniques et atmosphériques, elle est en règle générale disposée à l'intérieur d'un vitrage feuilleté. Par exemple, elle peut être disposée d'une manière particulièrement avantageuse, directement sur la surface d'une des deux feuilles de verre individuelles formant un vitrage feuilleté, qui est relié à l'autre feuille de verre individuelle par une couche intercalaire en une matière plastique transparente, comme du polyvinylbutyral.

Lorsque les feuilles de verre sont montées dans la carrosserie automobile par le procédé de collage, elles sont pourvues, en outre, d'une couche formant cadre d'un émail opaque. Cette couche formant cadre a pour but d'empêcher une vue de l'extérieur sur la couche d'adhésif. En même temps, ce cadre opaque protège la couche d'adhésif contre les rayons UV.

Des vitrages automobiles chauffables électriquement présentant une telle couche décorative sont notamment décrits dans les brevets US-A-4 820 902, US-A-4 725 710 et WO-A-8 806 095, les deux premiers brevets décrivant en outre des dispositions particulières des conducteurs d'alimentation de courant et le dernier brevet décrivant en outre un revêtement transparent multicouche.

Dans un procédé connu pour la fabrication de tels vitrages automobiles en verre feuilleté, on applique d'abord la bande marginale formant cadre en un émail à cuire opaque sur la surface orientée vers l'intérieur de la feuille de verre individuelle qui, dans le vitrage en verre feuilleté terminé et monté, est disposée sur le côté extérieur et on la sèche. Ensuite, dans une seconde opération d'impression a lieu l'application d'une pâte d'impression conductrice électrique faite d'un émail à cuire contenant de l'argent métallique pour former les barres d'alimentation de courant. Après la cuisson des deux émaux, la couche conductrice transparente est appliquée, par exemple selon un procédé de pulvérisation cathodique entretenue par champ magnétique, sur la feuille de verre portant le cadre opaque et les barres d'alimentation du courant. Des procédés de ce type sont décrits en détail, par exemple, dans les documents US-PS-4 744 844 et 4 654 067.

A l'état de la technique appartient également l'application du revêtement superficiel conducteur électrique en tant que première couche sur la feuille de verre individuelle tournée vers l'habitacle des passagers, sur la face de celle-ci qui est tournée vers la feuille de verre individuelle extérieure, et l'application des barres d'alimentation de courant sous la forme de bandes d'une pâte d'argent conductrice apte à l'impression sur le revêtement superficiel. La bande marginale opaque formant cadre doit, dans cette forme d'exécution, être disposée sur le côté intérieur de la feuille de verre individuelle extérieure, parce qu'elle doit empêcher la vue sur les barres d'alimentation de courant.

A l'état de la technique appartiennent également des émaux à cuire noirs à conductibilité électrique, ainsi que l'utilisation de tels émaux à cuire conducteurs électriques pour l'impression de la bande formant cadre, dite cadre décoratif, des parties de ce cadre décoratif étant utilisées directement comme conducteurs chauffants (document DE 37 24 014 A1). De cette façon, la partie inférieure du cadre décoratif située dans la région de repos des essuie-glaces peut, par exemple, servir au chauffage de cette région.

Pour tous les vitrages automobiles connus à chauffage superficiel du type spécifié, non seulement une opération d'impression double est nécessaire pour l'application du cadre décoratif et pour celle des barres d'alimentation de courant mais, en outre, les deux couches appliquées par impression doivent être soumises à un processus de séchage en des opérations séparées. Les barres d'alimentation de courant appliquées par impression ont, en outre, la propriété désavantageuse qu'en raison de la grande minceur de la couche d'impression, la section transversale conductrice est relativement peu importante, de sorte que dans le cas de puissances de chauffage élevées, les barres d'alimentation de courant s'échauffent d'une manière indésirable.

L'invention a pour but d'agencer un vitrage automobile chauffable comportant un revêtement superficiel, des conducteurs d'alimentation de courant et un cadre décoratif, d'une manière telle que l'opération de fabrication soit dans l'ensemble raccourcie et qu'en même temps la conductance électrique des conducteurs d'alimentation de courant soit accrue.

Suivant l'invention, ce but est réalisé par le fait que la couche décorative formant cadre est faite d'un émail conducteur électrique et est en contact de conduction électrique avec le revêtement superficiel et que les conducteurs d'alimentation de courant sont faits de bandes minces de métal ou de bandes métalliques qui sont en contact électrique avec la couche décorative ou avec le revêtement superficiel dans la région de la couche décorative formant cadre.

Alors que la mise en contact du revêtement superficiel avec des bandes minces de métal ou des bandes métalliques aboutit fréquemment, dans les réalisations connues, à une détérioration ou même à une destruction locale du revêtement superficiel immédiatement à côté de la bande métallique, et ce à cause des crêtes de tension et de courant nuisibles qui apparaissent dans ces régions, le montage conforme à l'invention aboutit non seulement à une simplification du procédé de fabrication, mais, en outre, simultanément à une suppression de ce défaut. Etant donné que le cadre décoratif conducteur électrique est en contact étroit avec le revêtement superficiel sur toute sa largeur, qui est en règle générale nettement plus grande que la largeur des conducteurs d'alimentation de courant habituels, une injection très uniforme du courant de chauffage dans le revêtement superficiel s'effectue sur la totalité de la surface de contact. Aucune crête de courant et de tension n'apparaît donc sur cette surface de contact. Cet effet de l'injection uniforme du courant se présente non seulement lorsque le cadre décoratif est disposé entre le revêtement superficiel et les conducteurs d'alimentation, mais également lorsque le cadre décoratif est disposé d'un côté du revêtement superficiel et que les conducteurs d'alimentation de courant se trouvent de l'autre côté du revêtement superficiel par rapport au cadre décoratif.

Lorsque la conductibilité superficielle de la couche décorative formant cadre est supérieure à la conductibilité du revêtement superficiel, c'est-à-dire lorsque la résistance superficielle de la couche décorative est inférieure à la résistance superficielle du revêtement superficiel, les régions situées entre les conducteurs d'alimentation de courant de la couche décorative formant cadre sont interrompues avantageusement par un petit canal de séparation. Ceci empêche que ces régions s'échauffent d'une manière indésirable.

Cependant, l'invention peut aussi être réalisée par application d'une couche décorative formant cadre dont la résistance superficielle est à peu près du même ordre de grandeur que celle du revêtement superficiel. Dans ce cas, la couche décorative formant cadre peut avoir la forme d'un cadre continu, c'est-à-dire sans interruption, parce qu'un échauffement plus marqué des régions correspondantes du cadre n'est dans ce cas pas escompté.

A titre d'émaux ou d'émaux à cuire pour la couche décorative formant cadre, on peut utiliser des compositions disponibles dans le commerce ou des compositions telles qu'elles sont décrites, par exemple, dans le document DE 37 24 014 A1. En choisissant ou en modifiant la composition de l'émail ou de l'émail à cuire et, de manière correspondante, l'épaisseur de la couche appliquée, on peut régler sans difficulté la résistance superficielle chaque fois nécessaire ou souhaitée.

D'autres réalisations et avantages de l'invention ressortiront des revendications dépendantes et de la description suivante de diverses formes d'exécution donnée avec référence aux dessins annexés, dans lesquels :
la Fig. 1 est une vue en coupe dans la région du conducteur d'alimentation de courant inférieur d'une première forme d'exécution d'un vitrage feuilleté chauffable;
la Fig. 2 est une vue en coupe dans la région du conducteur d'alimentation de courant inférieur d'une deuxième forme d'exécution d'un vitrage feuilleté chauffable, et
la Fig. 3 est une vue en élévation d'un vitrage feuilleté chauffable conforme à l'invention, comportant des conducteurs d'alimentation de courant élargis.

Les revêtements superficiels transparents de vitrages automobiles chauffables, qui servent de résistance chauffante et présentent une résistance superficielle relativement basse de l'ordre de 3 à 12 ohms par carré, sont en règle générale constitués d'oxyde d'indium-étain ou d'un système de couches comportant une couche de métal, en particulier une couche d'argent métallique, insérée entre des couches d'oxyde.

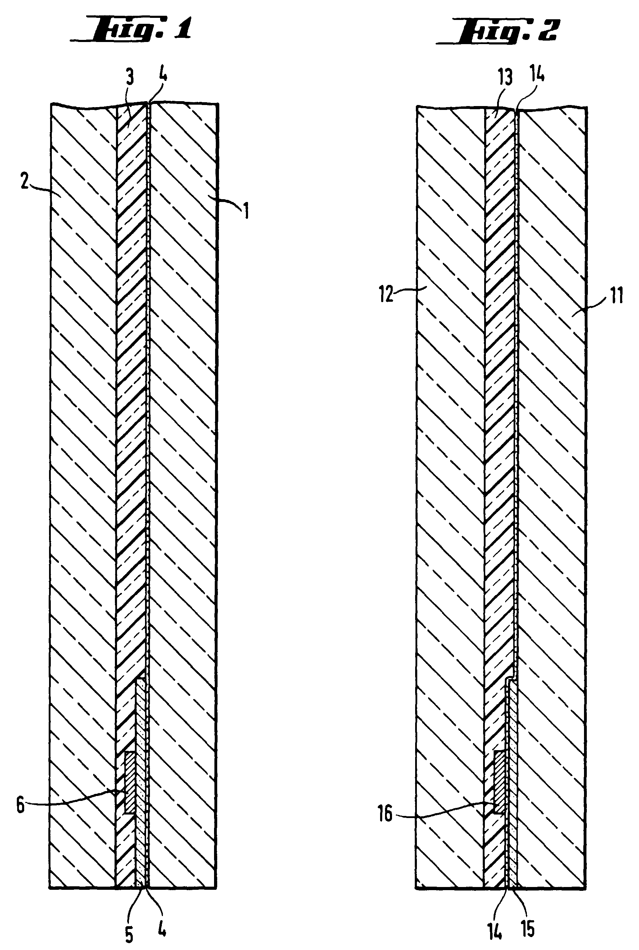

Dans le cas de la forme d'exécution illustrée sur la Fig. 1, une coupe de la région inférieure d'un pare-brise en verre feuilleté est représentée. Le vitrage en verre feuilleté comporte la feuille de verre silicaté 1 qui, dans l'état monté du pare-brise, est orientée vers l'extérieur, la feuille de verre silicaté 2 qui, dans l'état monté, est orientée vers l'habitacle des passagers et la couche intercalaire thermoplastique 3 en polyvinylbutyral qui unit les deux feuilles de verre silicaté 1 et 2 l'une à l'autre. La feuille de verre silicaté 1 extérieure est pourvue, sur sa face adjacente à la couche intercalaire 3, sans interruption jusqu'à ses bords, d'un revêtement superficiel 4 servant de résistance chauffante. Sur le revêtement superficiel 4 est imprimé un cadre décoratif 5 en un émail conducteur électrique non transparent. En particulier, le cadre décoratif 5 peut être constitué d'un émail à cuire, c'est-à-dire d'un émail apte à être imprimé par sérigraphie, qui est cuit à des températures plus élevées. La conductivité électrique de masse du cadre décoratif 5 n'est pas critique, mais elle doit avantageusement être suffisante pour ne pas entraîner une chute de tension entre la bande métallique 6 et la couche chauffante 4. Le flux d'alimentation du courant de chauffage passant de la bande métallique 6 à la couche chauffante 4 ne sera ainsi pas entravée par la résistance de masse du cadre décoratif 5.

Lorsque la résistance superficielle du cadre décoratif 5 est inférieure à celle de la couche chauffante 4, les régions latérales du cadre décoratif 5, qui se trouvent entre la bande métallique inférieure 6 et la bande métallique supérieure non représentée, y compris la couche chauffante 4 surjacente ou sous-jacente, doivent présenter chaque fois, en un ou plusieurs endroits, une interruption étroite qui empêche le passage direct du courant à travers ces parties de cadre.

Les bandes métalliques 6 peuvent être faites de bandes minces de cuivre ou de cordons plats en cuivre et peuvent, le cas échéant, être étamées. Elles sont appliquées sur le cadre décoratif 5 et sont éventuellement fixées, à l'aide d'un adhésif conducteur électrique. Cependant, le contact mécanique de la bande métallique 6 avec le cadre décoratif 5 est déjà suffisant pour l'injection du courant de chauffage dans le cadre décoratif 5 et les crêtes de tension et de courant résultant d'un contact non uniforme au niveau de l'interface entre la bande métallique 6 et le cadre décoratif 5 n'entraînent pas de dommages visibles à l'intérieur du cadre décoratif 5. Grâce au contact étroit sur la totalité de la surface, aucune crête de tension et de courant et, par conséquent, aucune détérioration de la couche chauffante sensible ne se produit cependant dans l'interface critique entre le cadre décoratif 5 et la couche chauffante 4.

Pour la fabrication du vitrage feuilleté chauffable représenté sur la Fig. 1, une grande feuille de verre plane est pourvue du revêtement superficiel 4, la feuille de verre 1 est découpée selon la forme souhaitée dans la feuille de verre revêtue et, sur la feuille de verre revêtue 1, est appliqué par sérigraphie le cadre décoratif 5. Après le séchage de l'émail d'imprimerie, cet émail est cuit par chauffage de la feuille de verre 1. La feuille de verre 1 est ensuite posée sur la feuille de verre 2 et les deux feuilles de verre sont bombées à la forme souhaitée à une température d'environ 600°C. Après le refroidissement des feuilles de verre bombées, une bande métallique 6 est appliquée le long des bords supérieur et inférieur de la feuille de verre sur le cadre décoratif 5 et est fixée, le cas échéant, au moyen d'un adhésif conducteur électrique. Les bandes métalliques 5 dépassent d'un côté de la feuille de verre et servent de conducteurs d'alimentation de courant. Les feuilles de verre 1 et 2 sont ensuite assemblées avec une pellicule 3 de polyvinylbutyral et sont unies à chaud et sous pression d'une manière connue dans un autoclave.

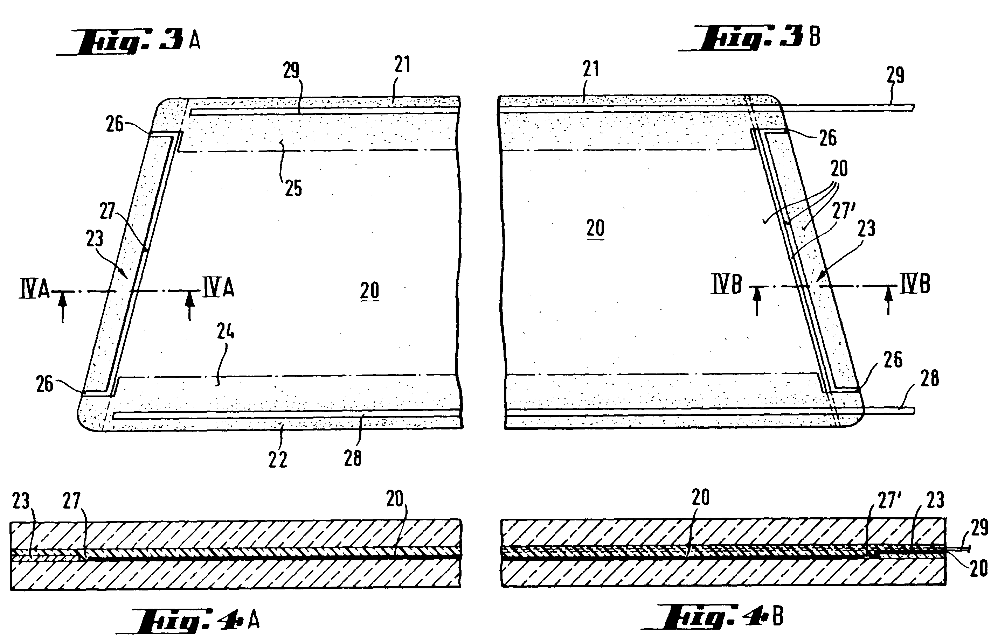

Dans le cas de la forme d'exécution illustrée sur la Fig. 2, la feuille de verre individuelle 11 du vitrage feuilleté représente à nouveau la feuille de verre d'un pare-brise orientée vers l'extérieur, tandis que la feuille de verre individuelle 12 est orientée vers l'habitacle des passagers. Les deux feuilles de verre 11 et 12 sont unies par la couche intercalaire thermoplastique 13. Sur la feuille de verre 11 est disposé, sur la surface orientée vers la couche intercalaire 13, le cadre décoratif 15 en émail à cuire conducteur électrique. La fabrication du cadre décoratif 15 s'effectue de la manière connue, selon laquelle l'émail à cuire est appliqué par sérigraphie sur la feuille de verre plane 1 et est cuit. La feuille de verre 11 pourvue du cadre décoratif cuit 15 est posée sur une seconde feuille de verre 12 et est bombée en même temps que celle-ci. Après le bombage, la surface de la feuille de verre 11 présentant le cadre décoratif 15 est pourvue de la couche chauffante 14 qui, dans ce cas, se trouve sur le cadre décoratif 15. La bande métallique 16 est disposée sur la couche chauffante 14 dans la région du cadre décoratif 15. Elle peut éventuellement être fixée par une couche d'adhésif conducteur électrique. L'injection du courant de chauffage dans la couche chauffante 14 s'effectue de cette manière également sans crêtes de tension et de courant dommageables, parce que dans ce cas, elle a lieu essentiellement par l'interface entre le cadre décoratif 15 et la couche chauffante 14, laquelle présente cependant un contact étroit et uniforme.

Lorsque les parties du cadre décoratif participant à l'alimentation de courant de la couche chauffante sont élargies en direction du champ de vision du pare-brise, à puissance de chauffage totale constante, la puissance de chauffage spécifique peut être accrue dans la zone centrale du pare-brise ou, à puissance de chauffage constante dans la zone de vision, la puissance de chauffage totale peut être réduite. Le cadre décoratif est avantageusement pourvu d'un tramage en direction de la zone de vision par lequel la transparence du pare-brise peut être réduite par échelons ou progressivement à partir de la zone de vision jusqu'au cadre décoratif opaque.

La Fig. 3 illustre la structure fondamentale d'un tel pare-brise comportant une région de transition entre la zone de vision chauffée par la couche chauffante 20 et les sections de cadre opaque 21 et 22. Le cadre décoratif 23 est pourvu, dans cette région de transition, de régions superficielles 24, 25 qui s'étendent en pointe dans la surface de vision. Bien entendu, dans cette région de transition peut être choisi n'importe quel tramage du cadre décoratif qui déplace les parties sous tension du cadre décoratif dans la zone de vision.

Par ailleurs, le pare-brise peut être agencé comme décrit dans les exemples de réalisation précédents.

Dans les régions latérales, le cadre décoratif 23 est chaque fois pourvu d'interruptions 26 qui entravent le passage direct du courant dans ces régions latérales. Ces interruptions ne doivent cependant pas être présentes lorsque la résistance superficielle de la couche formant le cadre décoratif est du même ordre de grandeur que celle de la couche chauffante transparente. Cependant, lorsque la résistance superficielle du cadre décoratif est inférieure à celle de la couche chauffante 20, il est avantageux de faire en sorte que la couche chauffante 20, à la limite des régions latérales du cadre décoratif, se termine avant celles-ci (ligne de délimitation 27). On peut réaliser ceci, par exemple, en sectionnant la couche chauffante au moyen d'un rayon laser suivant la ligne 27, comme représenté aux figures 3B et 4B. On peut aussi masquer les régions situées de l'autre côté des lignes de délimitation 27 au-dessus ou en dessous des régions latérales du cadre décoratif lors de l'application de la couche chauffante 20, comme représenté aux figures 3A et 4A. Cette mesure sert non seulement à former les interruptions 26, mais, en outre, à empêcher un échauffement indésirable dans la zone marginale du vitrage.

Les bandes métalliques 28 et 29 dépassent latéralement du vitrage feuilleté et servent de connexions d'alimentation de courant.

## Revendications

1. Vitrage automobile chauffable électriquement comportant un revêtement superficiel transparent, conducteur électrique, servant de résistance chauffante, des conducteurs d'alimentation de courant disposés le long de deux bords opposés du vitrage et une couche décorative formant cadre en un émail opaque, en particulier un émail à cuire, caractérisé en ce que la couche décorative formant cadre (5, 15, 23) est faite d'un émail conducteur électrique et est en contact de conduction électrique avec le revêtement superficiel (4, 14, 20) et que les conducteurs d'alimentation de courant sont faits de bandes minces de métal ou de bandes métalliques (6, 16, 28, 29) qui sont en contact électrique avec la couche décorative (5, 15, 21, 22), dans la région de la couche décorative formant cadre (5, 15, 21, 22).

2. Vitrage automobile chauffable électriquement suivant la revendication 1, caractérisé en ce que la couche décorative formant cadre (23) est pourvue, dans ses parties de cadre qui sont situées entre les conducteurs d'alimentation de courant (6, 16, 28, 29), d'interruptions (26) empêchant le passage du courant.

3. Vitrage automobile chauffable électriquement suivant la revendication 1 ou 2, caractérisé en ce que la couche chauffante (20), dans ses régions latérales, n'a aucun contact électrique avec les régions latérales du cadre décoratif (23) par le fait qu'elle se termine avant les régions latérales du cadre décoratif (ligne de délimitation 27) ou qu'elle est pourvue d'une ligne de séparation le long des régions latérales du cadre décoratif.

4. Vitrage automobile chauffable électriquement suivant les revendications 1 à 3, caractérisé en ce que la résistance superficielle de la couche décorative formant cadre (5, 15, 23) est de l'ordre de grandeur de la résistance superficielle du revêtement superficiel (4, 14, 20).

5. Vitrage automobile chauffable électriquement suivant l'une quelconque des revendications 1 à 4, caractérisé en ce que les bandes minces de métal ou les bandes métalliques (28, 29) formant les conducteurs d'alimentation de courant sont disposées le long du bord supérieur et du bord inférieur du vitrage, et qu'au moins une des régions superficielles (24, 25) de la couche décorative formant cadre (23) qui est en contact avec les bandes minces de métal ou les bandes métalliques (28, 29) est élargie en resserrant la zone de vision pourvue du revêtement superficiel (20).

6. Vitrage automobile chauffable électriquement suivant la revendication 5, caractérisé en ce que les régions superficielles de la couche décorative formant cadre qui sont en contact avec les bandes minces de métal ou les bandes métalliques dans lesquelles est prévue la zone de transition s'étendant jusqu'à la zone de vision, sont pourvues d'un tramage dont la transparence va en augmentant vers la zone de vision.

## Patentansprüche

1. Elektrisch heizbare Autoglasscheibe mit einer elektrisch leitfähigen, durchsichtigen als Heizwiderstand dienenden Flächenbeschichtung, mit entlang zweier gegenüberliegender Scheibenränder angeordneten Stromzuführungsleitern und mit einer rahmenartigen Dekorschicht aus einer lichtundurchlässigen Farbe, insbesondere einer Einbrennfarbe, **dadurch gekennzeichnet**, daß die rahmenartige Dekorschicht (5, 15, 23) aus einer elektrisch leitfähigen Farbe besteht und in elektrisch leitendem Kontakt mit der Flächenbeschichtung (4, 14, 20) steht, und daß die Stromzuführungsleiter aus Metallfolienstreifen oder Metallbändern (6, 16, 28, 29) bestehen, die im Bereich der rahmenförmigen Dekorschicht (5, 15, 21, 22) mit der Dekorschicht (5, 15, 21, 22) in elektrischem Kontakt stehen.

2. Elektrisch heizbare Autoglasscheibe nach Anspruch 1, dadurch gekennzeichnet, daß die rahmenartige Dekorschicht (23) in den Rahmenteilen, die zwischen den Stromzuführungsleitern (6, 16, 28,29) liegen, mit den Stromdurchgang verhindernden Unterbrechungen (26) versehen sind.

3. Elektrisch heizbare Autoglasscheibe nach Anspruch 1 oder 2, dadurch gekennzeichnet, dass die Heizschicht (20) in den seitlichen Bereichen keinen elektrischen Kontakt zu seitlichen Bereichen des Dekorrahmens (23) hat, indem sie vor den seitlichen Bereichen des Dekorrahmens endet (Begrenzungslinie 27) oder entlang den seitlichen Bereichen des Dekorrahmens mit einer Trennlinie (27) versehen ist.

4. Elektrisch heizbare Autoglasscheibe nach Anspruch 1 bis 3, dadurch gekennzeichnet, dass der Flächenwiderstand der rahmenartigen Dekorschicht (5, 15, 23) in der Größenordnung des Flächenwiderstandes der Flächenbeschichtung (4, 14, 20) liegt.

5. Elektrisch heizbare Autoglasscheibe nach einem der Anspüche 1 bis 4, dadurch gekennzeichnet, daß die die Stromzuführungsleiter bildenden Metallfolienstreifen oder Metallbänder (28,29) entlang dem oberen und dem unteren Rand der Scheibe angeordnet sind, und daß wenigstens einer der mit den Metallfolienstreifen oder Metallbändern (28,29) in Kontakt stehenden Flächenbereiche (24,25) der rahmenartigen Dekorschicht (23) unter Einengung des mit der Flächenbeschichtung (20) versehenen Sichtfeldes verbreitert ist.

6. Elektrisch heizbare Autoglasscheibe nach Anspruch 5, dadurch gekennzeichnet, daß die mit den Metallfolienstreifen oder Metallbändern in Kontakt stehenden Flächenbereiche der rahmenartigen Dekorschicht in dem sich zum Sichtfeld hin erstreckenden Übergangsbereich mit einer Rasterung mit zum Sichtfeld hin zunehmender Transparenz versehen sind.

## Claims

1. Electrically heatable car glazing having an electrically conductive, transparent, surface coating serving as a heating resistor, power supply conductors positioned along two opposite edges of the glazing and a decorative coating forming an opaque enamel and in particular baking enamel frame, characterized in that the decorative coating forming the frame (5, 15, 23) is made from an electrically conductive enamel and is in electrically conducting contact with the surface coating (4, 14, 20) and the power supply conductors are formed from thin metal strips or metallic strips (6, 16, 28, 29) in electrical contact with the decorative coating (5, 15, 21, 22) in the region of the decorative coating forming the frame (5, 15, 21, 22).

2. Electrically heatable car glazing according to claim 1, characterized in that the decorative coating forming the frame (23) is provided, in its frame portions located between the power supply conductors (6, 16, 28, 29), with interruptions (26) preventing the passage of current.

3. Electrically heatable car glazing according to claim 1 or 2, characterized in that the heating coating (20), in its lateral regions, has no electrical contact with the lateral regions of the decorative frame (23) because it is terminated before said lateral regions of the decorative frame (delimitation line 27) or is provided with a separation line along the lateral regions of the decorative frame.

4. Electrically heatable car glazing according to claims 1 to 3, characterized in that the surface resistance of the decorative coating forming the frame (5, 15, 23) is of the same order of magnitude as the surface resistance of the surface coating (4, 14, 20).

5. Electrically heatable car glazing according to any one of the claims 1 to 4, characterized in that the thin metal strips or metallic strips (28, 29) forming the power supply conductors are arranged along the upper edge and lower edge of the glazing and that at least one of the surface regions (24, 25) of the decorating coating forming the frame (23) and which is in contact with the thin metal strips or metallic strips (28, 29) is widened so as to narrow the area of vision provided with the surface coating (20).

6. Electrically heatable car glazing according to claim 5, characterized in that the surface regions of the decorative coating forming the frame and which are in contact with the thin metal strips or metallic strips in which is provided the transition area extending up to the area of vision, are provided with a screening, whose transparency increases towards the area of vision.
